# EUROPEAN PATENT APPLICATION

(11) **EP 4 657 746 A2**
(43) Date of publication of application: **03.12.2025**
(21) Application number: 25174395.1
(22) Date of filing: 06.05.2025
(51) Int. Cl.: H02P 9/00, H02J 3/46, H02P 9/30, H02P 29/028

(54) **DISTRIBUTED MULTI-PHASE GENERATOR WITH MULTIPLE SUB-PHASES AND FIELD ANGLE MODULATION**

(30) Priority: 31.05.2024 IN 202411042380; 08.08.2024 US 202418797724
(71) Applicant: Honeywell International Inc., Charlotte, NC 28202 (US)
(72) Inventor: MUBASLAT, Saed M., Charlotte, 28202 (US); NIEWIADOMSKI, Walter, Charlotte, 28202 (US); KODAGAVALLI, Deepak, Charlotte, 28202 (US)
(74) Representative: Ingrassia, Fisher & Lorenz UK Ltd.

(57) **Abstract**

A distributed multi-phase generator includes a plurality of generator subsystems, with each generator subsystem including a respective processor and rotor. The plurality of generator subsystems is configured to generate a combined voltage output that is in one of a plurality of different phases. The plurality of generator subsystems are configured to communicate operating parameters to each other, and in some embodiments, can control another generator subsystem or compensate for changes in operation of another generator subsystem (including faults). As part of dynamic generator operation, each generator subsystem can adjust its field angle modulation scheme based on feedback received from other generator subsystems as well as its own operation.

## Description

### CROSS-REFERENCE TO RELATED APPLICATIONS

This application claims the benefit of Indian Provisional Application No. 202411042380 filed on May 31, 2024, and titled "DISTRIBUTED MULTI-PHASE GENERATOR WITH MULTIPLE SUB-PHASES AND FIELD ANGLE MODULATION", the contents of which are incorporated herein in their entirety.

### BACKGROUND

Aerial vehicles such as commercial aircraft utilize power systems to provide power for aircraft system functionality. Such power systems typically comprise one but potentially more alternating current (AC) generators that generate power.

Generators are complex systems, and exist in many forms. One example is a multi-phase generator, which is configured to generate and deliver power in a designated set of phases. Example multi-phase generators include three-phase, six-phase, and twelve-phase generators. However, multi-phase generators are currently designed as rigid and inflexible systems. Twelve-phase generators in particular generally lack redundancy and fail-safe operation, so that in the event of an intrinsic fault, the generator must cease operation until the fault is cured. Additionally, the internal operation in the generator, such as phase and modulation control, is statically driven, which may not be suitable for either efficient performance of the generator or for desired needs of external systems that receive power from the generator.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of any patents, applications and publications as identified herein to provide yet further embodiments.

In one embodiment, a distributed multi-phase generator system is disclosed. The distributed multi-phase generator system comprises a plurality of generator subsystems. Each of the plurality of generator subsystems comprises a respective at least one processor, a respective power generation circuit, and a respective motor electrically coupled to the respective power generation circuit. The plurality of generator subsystems is configured to generate a combined variable phase voltage output in one of twelve phases, wherein the combined variable phase output includes an even or odd number of phases. Each of the plurality of generator subsystems are electrically coupled together via at least one shared network. Each of the plurality of generator subsystems is configured to determine respective operating parameters, and to communicate its respective operating parameters to other generator subsystems of the plurality of generator subsystems. Each of the plurality of generator subsystems is configured to adjust its respective voltage output relative to a desired combined voltage output based on at least one operating parameter of the distributed multi-phase generator system.

In another embodiment, a distributed twelve-phase generator system is disclosed. The distributed twelve-phase generator system comprises a plurality of generator subsystems, each of the plurality of generator subsystems comprising a respective at least one processor, a respective power generation circuit, and a respective motor electrically coupled to the respective power generation circuit. The plurality of generator subsystems is configured to generate a combined variable phase voltage output in one of twelve phases, wherein the combined variable phase output includes an even or odd number of phases. Each of the plurality of generator subsystems are electrically coupled together via at least one shared network. Each of the plurality of generator subsystems is configured to determine respective operating parameters, and to communicate its respective operating parameters to other generator subsystems of the plurality of generator subsystems. Each of the plurality of generator subsystems is configured to adjust its respective voltage output relative to a desired combined voltage output based on at least one operating parameter of the distributed twelve-phase generator system.

In yet another embodiment, a method of operating a distributed multi-phase generator system is disclosed. The method comprises generating, by each of a plurality of generator subsystems electrically coupled together via at least one shared network, a voltage output in at least one of a plurality of phases. The method comprises determining, by each of the plurality of generator subsystems, one or more operating parameters of the plurality of generator subsystems. The method comprises communicating the respective operating parameters to at least one other generator subsystem of the plurality of generator subsystems. The method comprises adjusting a voltage output and/or operating parameters of at least one of the generator subsystems based on one or more operating parameters of the distributed multi-phase generator.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as briefly summarized as follows.
Figure 1 depicts a circuit diagram of a distributed multi-phase generator system, as described in one or more embodiments.
Figure 2 depicts a graphical representation of a sinusoidal field angle modulation scheme applied to the winding coils of a generator subsystem, as described in one or more embodiments.
Figure 3 depicts a graphical representation of a trapezoidal field angle modulation scheme applied to the winding coils of a generator subsystem, as described in one or more embodiments.
Figure 4 depicts a flow diagram of a method for operating a generator subsystem in a distributed twelve-phase generator, as described in one or more embodiments.
Figure 5 depicts a flow diagram of a method for operating a distributed multi-phase generator.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, any methods presented in the drawing figures and the specification are not to be construed as limiting the order in which the individual steps may be performed. The following detailed description is, therefore, not to be taken in a limiting sense.

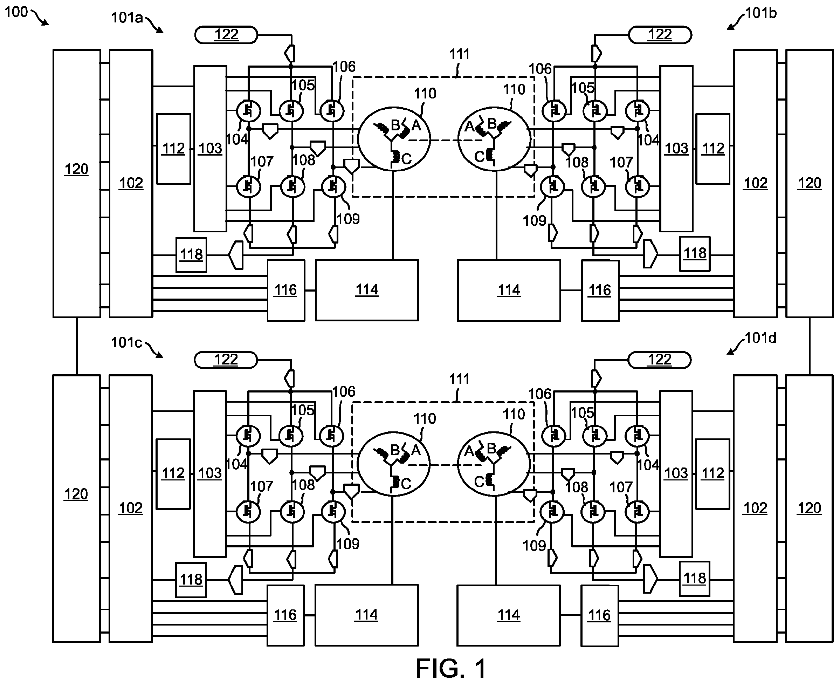

Figure 1 depicts a circuit diagram of a distributed multi-phase generator system 100. The distributed multi-phase generator system 100 is installed on a vehicle generally configured to generate and provide power to other system(s) or device(s) on the vehicle. Use of the term "vehicle" is not intended to be limiting and includes all classes of vehicles falling within the ordinary meaning of the term. This would include but not limited to, aerial traversing vehicles, unmanned and/or space traversing vehicles, water traversing vehicles, and land traversing vehicles. Throughout the disclosure, the vehicle may be further illustrated as an aircraft with the understanding that the principles described herein apply to other vehicles where applicable. In the context of aircraft, example systems and devices that can receive power include sensor systems, communication systems, navigation systems, avionics devices (i.e. devices that provide navigation functionality to a pilot or operator and receive input from a pilot or operator), and engines. These systems and devices can be electrically coupled to distributed multi-phase generator system 100 via a communication bus 120.

Distributed multi-phase generator system 100 functions as a twelve-phase generator, in which power is ordinarily generated in twelve distinct phases. However, power is not generated in one centralized system. Instead, distributed multi-phase generator system 100 comprises a plurality of generator subsystems, each configured to generate all or a portion of the output power that is ultimately provided to a coupled load. In the embodiment shown in Figure 1, four distinct subsystems 101a-d form the distributed multi-phase generator system 100, with each subsystem electrically coupled to the remaining subsystems via a shared network.

Detailed operation of the power generation will be described with reference to subsystem 101a, in which the same principles apply to subsystems 101b-d. Subsystem 101a includes a motor assembly 111 comprising a rotor 110. Rotor 110 is configured to undergo rotational motion about an axis, which generates a torque dependent on the rotational speed. The mechanical torque is converted to electrical power by a power generation circuit comprising a plurality of switches 104-109. In the embodiment shown in Figure 1, subsystem 101a includes 6 switches 104, 105, 106, 107, 108, 109 that are switched independently from one another. In some embodiments, the switches 104-109 are implemented as metal-oxide-semiconductor field-effect transistors (MOSFETs).

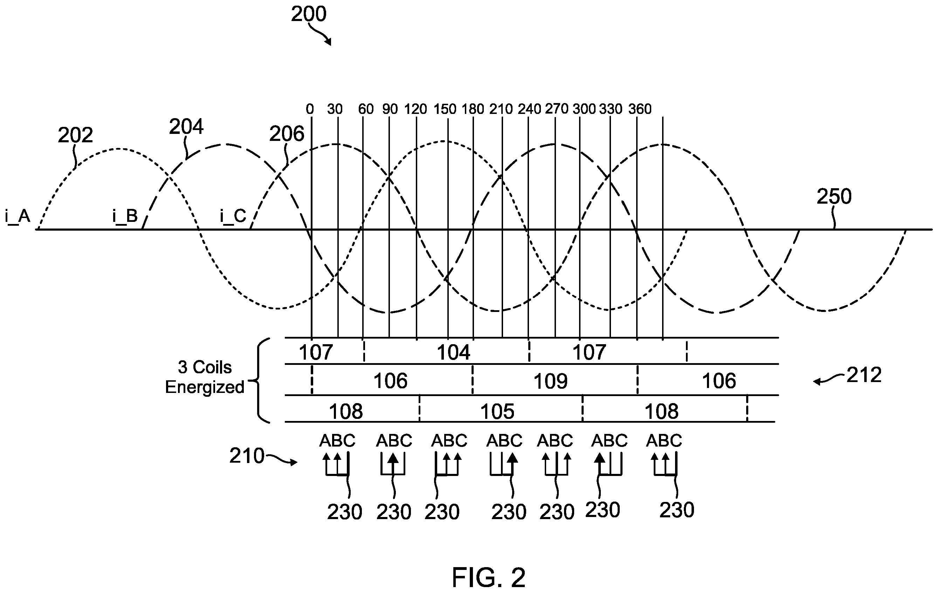

To generate power in the motor assembly 111, a power supply 122 (such as a direct current (DC) power circuit) provides energizing power to each of the switches 104-109. As the rotor 110 undergoes rotational motion it generates torque, which can be converted into power (e.g., alternating current (AC) power) by a stator in the motor assembly 111. In the embodiment of Figure 1, each rotor 110 is configured as a three-phase generator, meaning that the power output by the motor assembly 111 is classified by one of three distinct phases. Each phase corresponds to a particular winding coil of the rotor 110 (designated as A, B, and C in Figure 1), which becomes excited as a function of the rotor 110 position. Thus, each winding coil will ordinarily become energized (and de-energized) at different times as the current flowing through each winding coil fluctuates. Further illustration and discussion of the excitation current of the winding coils is described with respect to Figures 2-3.

The power delivered by the motor assembly 111 is dependent on the configuration of switches 104-109, which can change as the rotor 110 generates torque. For example, when the current through winding coil A is approaching maximum, switches 105, 107, and 109 are closed while switches 104, 106, and 108 remain open, thereby allowing current to flow through between driver 103, switches 105, 107, 109, and the motor assembly 111, which is then output to current sensor 118 and subsequently to communication bus 120. When the current flowing through winding coil B is approaching maximum, switches 104, 108, and 109 are activated while switches 105, 106, and 107 become disabled or open. Additionally, when the current flowing through winding coil C becomes energized at its maximum, switches 104, 105, and 109 are open while switches 106, 107, and 108 are closed. During continuous steady-state operation of the motor assembly 111, each of the winding coils A, B, C will undergo periodic maxima and minima current values, resulting in continuous reconfiguration of the switches. Furthermore, in some configurations the outputs of switches 107, 108, and 109 are combined as they are provided to current sensor 118.

Current sensor 118 is configured to determine one or more parameters indicative of the current of the power output from switches 104-109. Current sensor 118 also provides the signal output to bus 120, which can be electrically coupled (e.g., via one or more networks) to systems or devices that receive the power.

Still referring to Figure 1, resolver 114 is electrically coupled to rotor 110 in the motor assembly 111 and is configured to generate signals to the processor 102 to provide the proper excitation sequence to the winding coils A, B, C. In some embodiments, resolver 114 includes one or more wires that engage with each winding coil of the rotor 110 as the rotor 110 undergoes motion. Additionally, or alternatively, resolver 114 includes a stator that generates current in the rotor 110 without physically contacting with the winding coils using wires or brushes. A rotor monitoring circuit 116 is electrically coupled to the resolver 114 and receives raw signals corresponding to movement of the rotor 110 from resolver 114. Rotor monitoring circuit 116 is configured to determine one or more parameters characterizing the motion of rotor 110, such as the rotor position and speed as a function of time. For example, rotor monitoring circuit 116 can include or be coupled to one or more Hall sensors that capture the speed of the rotor 110 based on changes in the magnetic field of the rotor. These Hall sensors can be coupled to an amplifier that powers the Hall sensor to monitor the rotor 110 speed. Rotor monitoring circuit 116 provides these parameters to processor 102 for further analysis.

To drive the current that is supplied by the subsystem 101, a driver 103 is installed and coupled to each of the switches 104-109 and electrically coupled to rotor 110 via each of the switches. For a three-phase generator subsystem 101, driver 103 applies six distinct pulse width modulation signals that respectively apply to each of the switches so that the current flowing through each switch (output from winding coils A, B, C) is modulated in a periodic manner. In doing so, the amplitudes of each current flowing through each switch will be different at any given time. The pulse width modulation parameters used by driver 103 are supplied by a pulse width modulation (PWM) circuit 112, which provides each distinct PWM signal to driver 103.

Processor 102 acts as the main control and processing entity for each generator subsystem 101. Processor 102 is configured to receive operating parameters of the generator subsystem 101, such as the position, speed, and current generated by the rotor 110, and controls the operation of the rotor 110 and circuitry present in the generator subsystem 101. For example, as subsequently described processor 102 can set and adjust the type and extent of pulse width modulation given to PWM circuit 112 and ultimately to driver 103. Additionally, processor 102 can determine and control the operation of the rotor 110 so that the rotor 110 generates current and power that meet appropriate criteria.

Processor 102 may include any one or combination of processors, microprocessors, digital signal processors, application specific integrated circuits, field programmable gate arrays, and/or other similar variants thereof. Processor 102 may also include, or function with, software programs, firmware, or other computer readable instructions for carrying out various process tasks, calculations, and control functions, used in the methods described below. These instructions are typically tangibly embodied on any storage media (or computer readable media) used for storage of computer readable instructions or data structures.

Now referring to the distributed multi-phase generator 100 generally, each generator subsystem 101a-d includes a respective processor 102, rotor 110, and switches 104-109 to facilitate a portion of the power generated by the combined generator 100. The total power output can be delivered by the distributed multi-phase generator 100 through the bus 120 that connects each generator subsystem 101 and to external loads that are electrically coupled to the distributed multi-phase generator 100. For example, if multi-phase generator 100 is configured to generate 100 kW of power, each generator subsystem 101 may generate 25 kW of the total power output, or may generate unequal power outputs from each subsystem (where subsystem 101a generates 30 kW, subsystem 101b generates 40 kW, subsystem 101c generates 20 kW, and subsystem 101d generates 10 kW). The power generated by each subsystem 101a-d can differ in other ways.

Each subsystem 101 is configured to detect faults with respect to operation of its own subsystem. For example, processor 102 of subsystem 101a is configured to monitor for faults with respect to operation of driver 103, switches 104-109, and rotor 110. If a fault is detected with respect to one or more of the switches 104-109, in some embodiments, subsystem 101a is configured to generate override signals that override the state of the switches 104-109 to maintain continuous operation. Some faults, however, may not be overridden. For example, if processor 102 of subsystem 101a experiences a processing fault, or if rotor 110 experiences a mechanical fault, the subsystem 101a may enter a disabled state in which it cannot generate power.

Distributing the functions of the distributed multi-phase generator 100 over a plurality of generator subsystems 101a-d adds redundancy and thereby improves fault tolerance of the generator 100. Specifically, each of the generator subsystems include a separate processor 102 configured to operate independently of the processors 102 of each of the other subsystems 101a-d. However, since each subsystem 101 is coupled to a shared network via bus 120, the functions attributed to one processor can be assigned to another processor in the event of a processing or electrical fault in one or more of the subsystems 101. For example, if subsystem 101a experiences a processing fault in its processor 102, then processor 102 of subsystem 101b can control the operation of subsystem 101a (in addition to subsystem 101b). Doing so enables a faulty subsystem 101a to continue operating for non-lethal faults as a multi-phase generator.

Even for lethal faults (faults in which one or more subsystems 101 cannot operate), distributed multi-phase generator 100 can still maintain operation as a whole. For example, if subsystem 101a experiences a lethal fault and shuts down, distributed multi-phase generator 100 can still continue operation and generate substantially equal power. In the event of one of the rotors 110 experiencing a fault, the distributed multi-phase generator 100 operates with a reduced number of total phases. In one embodiment, a total malfunction on rotor 110 of subsystem 101a results in operating generator 100 as an effective nine-phase generator, since three of the phases of the total output were supplied by the malfunctioning subsystem 101a. In other embodiments, only a portion of the subsystem 101a experiences a fault, such as in one of the switches 104-109 or in one of the winding coils A, B, C of the rotor 110. In this situation, the generator 100 operates as an eleven-phase generator (if one winding coil is inoperable) or as a ten-phase generator (if two winding coils are inoperable).

Accordingly, the distributed multi-phase generator 100 is configured to operate as a lesser phase generator even in the event of a detected fault in one or more of the subsystems 101. In the case of a twelve-phase generator, the effective phase output from the generator can be any combination of phases less than twelve, including even phases such as eight-phase, six-phase, four-phase, and odd phases such as eleven-phase, nine-phase, and five-phase. In the event of additional faults that render one or more of the subsystems 101 inoperable, the distributed multi-phase generator 100 can maintain operation by reducing the total phase output of power that is delivered over bus 120. In some embodiments, the number of phases in the output is preferably set to an even number of phases over an odd number of phases (when such an alternative is available), since an even-phase output is more stabilized in response to changes in PWM from driver 103. However, distributed multi-phase generator 100 can still output a variable phase output in an odd number of phases and satisfy power requirements and demands from recipient systems and/or devices on the vehicle.

When one of the subsystems 101a-d cannot produce the desired three-phase output due to some fault (or even in the absence of a fault), it is configured to communicate with the remaining subsystems 101. Doing so enables each subsystem 101a-d to dynamically adapt to changes in operation in order to maintain continuous operation and maintain desired power output. In the case that subsystem 101a experiences a fault that renders it incapable of achieving a three-phase output, then it communicates to other subsystems 101b-d over bus 120 of the type of fault that it experienced and its operating status. Processors 102 (or in some embodiments a central processing system) are configured to determine, based on the operating parameters of each of the subsystems 101a-d, the output phases of each of the subsystems. For example, if subsystem 101a incurs a malfunction that renders it capable of outputting only 2 phases, then one or more of the processors 102 determine what the total phase of the distributed multi-phase generator 100 should be, and if necessary, to reconfigure and delegate the output phases among the subsystems 101a-d. In one example, the distributed multi-phase generator 100 may operate as an eleven-phase generator, in which case subsystem 101a outputs a two-phase output and the remaining subsystems 101b-d output a three-phase output. However, in this example a ten-phase output may be selected, in which case subsystem 101a can output a single phase and the remaining subsystems 101b-d output a three-phase output, or subsystem 101a can output a two-phase output and the remaining subsystems output a combined eight-phase output (i.e., one of the subsystems 101b-d output a two-phase output with the remining subsystems outputting a three-phase output).

In addition to communicating faults, subsystems 101a-d also communicate other operating parameters regarding the operation of the subsystems 101a-d. For example, each subsystem 101a-d can communicate information such as the rotor speed and current, output current and power, phase output, output efficiency, switching configurations, PWM parameters, and other operating parameters. Subsystems 101a-d use this information in controlling their own respective operation as well as coordinating their own operation to output a combined phase output over bus 120. In this way the distributed multi-phase generator 100 can optimize operation and performance even during long-term continuous operation. For example, if the output power from subsystem 101a decreases in response to reduced efficiency, one or more of the other subsystems 101b-d can increase the power output to compensate for the lack of efficiency from subsystem 101a and maintain the same power output. In some embodiments, where increasing the efficiency or output of a given subsystem would exceed safe operating limits, processors 102 determine and configure the output of distributed multi-phase generator 100 to optimize power that does not exceed safe operation.

Additionally, as part of its dynamical operation, each generator subsystem 101a-d is configured to adjust the parameters of field angle modulation applied to PWM signals in the subsystem. One exemplary field angle modulation scheme is shown in Figure 2, which depicts a graphical representation 200 of a sinusoidal field angle modulation scheme applied to the winding coils of a generator subsystem. In Figure 2, the graphical representation is oriented such that the vertical axis is the amplitude of the current and the horizontal axis is the phase (in degrees) of the current. Three curves 202, 204, 206 are plotted in Figure 2, each corresponding to the excitation current to a different winding coil of the rotor 110. In the embodiment of Figure 2, curve 202 is the current flowing through winding coil A, curve 204 is the current flowing through winding coil B, and curve 206 is the current flowing through winding coil C.

Specifically, each curve 202, 204, 206 is a sinusoidal periodic curve in which current between each winding coil oscillates between a maximum and minimum value. The oscillation between different phases occurs at different times so that winding coil A is energized at a different time than winding coil B, and winding coil B is energized at a different time than winding coil C. Generally, for a given phase, the amplitude of current flowing through each winding coil A, B, C is different. For example, for a phase of 0 degrees, the excitation current is positive valued for curve 206 (corresponding to winding coil C), approximately zero for curve 204 (corresponding to winding coil B), and negative valued for curve 202 (corresponding to winding coil A). As shown in Figures 2-3, a positive valued current is above the horizontal axis 250 while a negative valued current is below the axis 250.

The switching configuration of switches 104-109 at each phase is depicted below curves 202, 204, 206 by label 212. At any given phase, a combination of switches 104-109 is activated to energize the winding coils A, B, C, which produces the sinusoidal curves 202, 204, 206 shown in Figure 2. For example, at a phase of 30 degrees switches 106, 107, and 108, are activated to produce the curves 202, 204, 206 shown in Figure 2. Then at a phase of 210 degrees, switches 104, 105, and 109 become activated. Each switch remains activated for a period of 180 degrees.

Also shown in Figure 2 is the commutation relationship between the winding coils A, B, and C, indicated by label 210, which corresponds to the given phase and switching configuration that produces the curves 202, 204, 206. The bold line 230 indicates which commutation relationship is present. For example, at a phase of 30 degrees, the winding coils are energized so that winding coil C provides the input current flow through windings A and B. The commutation relationship changes as the rotor 110 undergoes motion, so that at a later phase the winding coils are energized in the order of C+, A-, B-, followed by the order A+, C+, B-, with + denoting a positive flowing current through the respective winding coil and - denoting a negative flowing current. The commutations are cyclic and hence will repeat since the rotor 110 undergoes periodic motion.

Advantageously, each generator subsystem 101a-d is configured to adjust the field angle relationship between each of the winding coils A, B, C based on the operating parameters of each subsystem and the distributed multi-phase generator 100 more generally. As shown in Figure 2, each curve 202, 204, 206 oscillates with respect to a specific phase duration, where in some embodiments it is beneficial to keep the oscillation between winding coils A, B, and C static relative to each other. Yet, in some situations this static relationship is not optimal and may even be detrimental to operation of the distributed multi-phase generator 100 (for example, when faults occur). Thus, the field angle relationship between each of the winding coils A, B, C can be changed to optimize efficiency of the generator 100 or in response to some changing condition. Although not shown directly in Figure 2, the field angle relationship can be changed by shifting one of the curves relative to another curve (for example, curve 202 relative to curves 204 and 206). Doing so enables the excitation of winding coils at different phases of the rotor 110, so that excitation of one winding coil may be closer in phase (or farther away from) relative to another winding coil. In one such example, curve 202 can be shifted 30 degrees in phase than as shown in Figure 2, or even 120 degrees so that winding coils A and C are energized simultaneously in phase.

Each generator subsystem 101a-d can perform additional field angle modulation with respect to the rotor 110. In some embodiments, one or more characteristics of the excitation curves 202, 204, 206 are adjusted based on the operating parameters of the respective generator subsystem 101a-d and the distributed multi-phase generator 100 as a whole. For example, as the rotor 110 changes in speed, or in response to a need for increased power (e.g., if another subsystem 101a-d has malfunctioned), a subsystem 101a-d controls the driver 103, switches 104-109, and the pulse width modulation supplied by PWM circuit 112 to adjust characteristics such as the amplitude, frequency, and phase overlap between curves 202, 204, 206 corresponding to the excitation current of winding coils A, B, C. For example, the excitation of winding coil A can be extended so that the amplitude of curve 202 remains constant for a selected phase duration (referred to as "phase advance"). In another example, a subsystem 101a-d adjusts the frequency of phase excitation for each of curves 202, 204, 206 so that the excitation of one winding coil overlaps with the excitation of another winding coil for some phase duration (referred to as "phase overlap"). With this adaptive control of field angle modulation, each generator subsystem 101a-d is capable of selective control of the excitation current of each winding coil beyond a static excitation sequence (e.g., every 60 degrees), thereby improving operation of the distributed multi-phase generator 100 as operation conditions change.

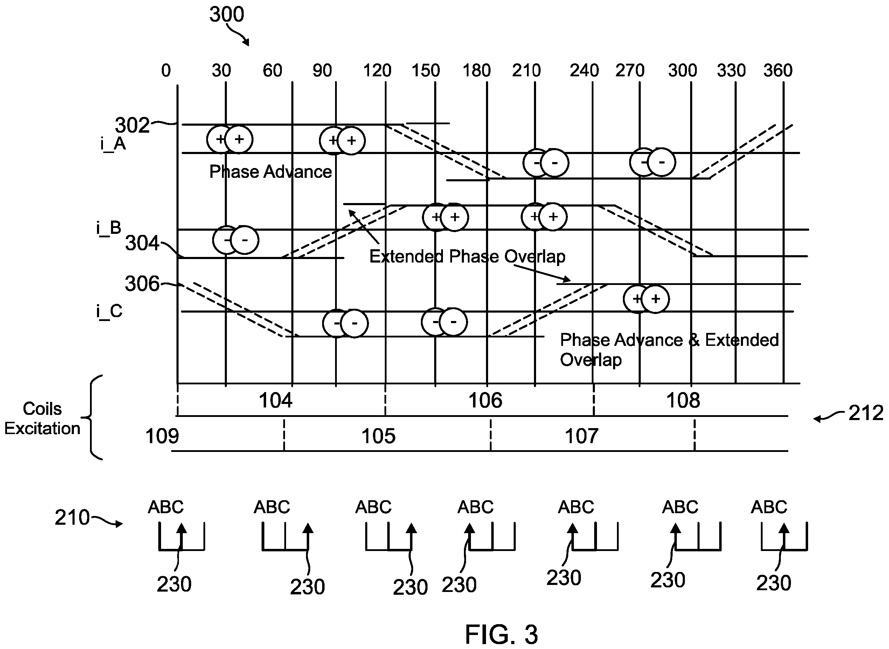

Figure 3 depicts a graphical representation 300 of a trapezoidal current modulation scheme applied to the winding coils of a generator subsystem. Similar to Figure 2, the graphical representation in Figure 3 is oriented such that the vertical axis is the amplitude of the current and the horizontal axis is the phase (in degrees) of the current. Three curves 302, 304, 306 are plotted in Figure 3, each corresponding to the excitation current to a different winding coil in the motor assembly 111. In the embodiment of Figure 3, curve 302 is the current flowing through winding coil A, curve 304 is the current flowing through winding coil B, and curve 306 is the current flowing through winding coil C.

The primary difference between the current modulation scheme of Figure 2 and that of Figure 3 is the type of modulation applied to the winding coils A, B, C. Instead of a sinusoidal current, a periodic trapezoidal current is applied to produce the curves 302, 304, 306. Providing a trapezoidal modulation can be desirable in some circumstances, for example, if one or more of the subsystems 101a-d have experienced faults that impede operation of the distributed multi-phase generator 100. As previously noted, each generator subsystem 101a-d can adjust characteristics of the excitation current applied to each of the winding coils A, B, C, and the selective control and adjustment of characteristics of the excitation currents are more readily shown in Figure 3. For example, a phase advance is applied to curve 302 (corresponding to the excitation current of winding coil A) to extend the excitation of winding coil A from 0 to over 150 degrees in phase. Additionally, a phase overlap modulation is applied to curve 304 so that the positive excitation of winding coil B overlaps with the positive excitation of winding coil C for a short phase duration. Finally, a combination of phase advance and phase overlap modulation is applied to curve 306. As a result, each curve 302, 304, 306 alone or in combination can be selectively modulated to optimize the operation of the generator subsystem 101.

In additional examples of adaptive modulation control, each generator subsystem 101a-d is configured to adjust the parameters of the pulse width modulation used by driver 103. In some embodiments, processor 102 can adjust the amplitude, frequency, type of modulation, or a combination thereof, based on the operating parameters of the generator subsystems 101a-d and the distributed multi-phase generator 100 more generally. Furthermore, referring to Figures 2-3, each generator subsystem 101a-d is configured to change the type of excitation waveform between sinusoidal and trapezoidal based on the operating parameters of the generator subsystems 101a-d and the distributed multi-phase generator 100 more generally.

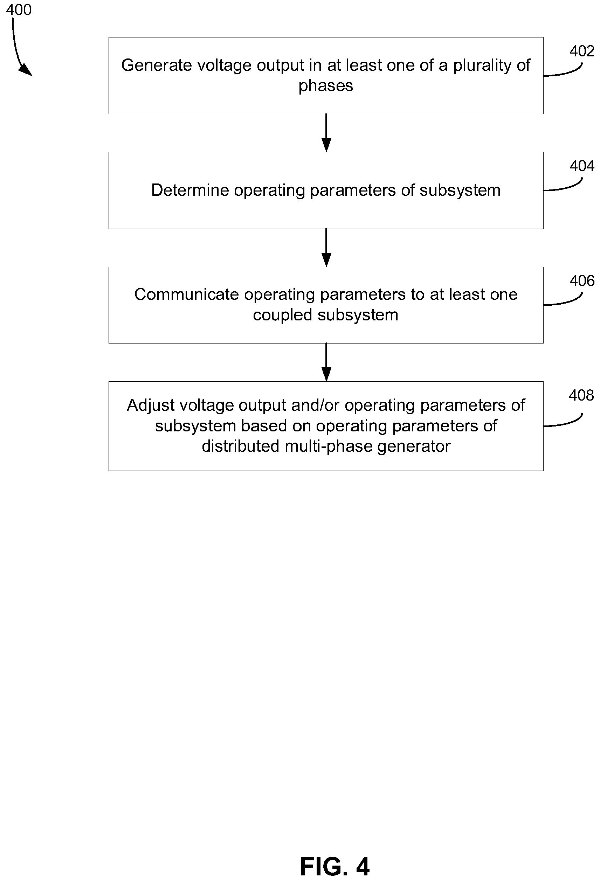

Figure 4 depicts a flow diagram of a method 400 for operating a generator subsystem in a distributed twelve-phase generator. Method 400 may be implemented via the techniques described with respect to Figures 1-3, but may be implemented via other techniques as well. In some embodiments, method 400 is performed from the perspective of one of the generator subsystems 101a-d as depicted in Figure 1. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 400 includes generating a voltage output in at least one of a plurality of phases at block 402. Referring to Figure 1, subsystem 101a is configured as a three-phase generator and so is configured to output a voltage output in a single phase, two-phases, or three-phases. In some embodiments, such as when subsystem 101a experiences a fault, it may output a voltage with less than three-phases.

Method 400 proceeds to block 404 and determines one or more operating parameters of the subsystem. For example, processor 102 of subsystem 101a can determine parameters of the rotor 110 (rotor position, speed, phase, torque, excitation current), switching configuration of switches 104-109, PWM parameters (amplitude, frequency, and/or type of modulation), field angle modulation parameters (type of field angle modulation and extent of phase overlap or advance), and other parameters that characterize the operation of subsystem 101a.

At block 406, method 400 communicates operating parameters to at least one coupled subsystem, such as the other subsystems 101b-d depicted in Figure 1. Each of the subsystems 101a-d are coupled together by at least one shared network, such as bus 120. During operation of the distributed multi-phase generator 100, each subsystem 101a-d communicates operating parameters determined in block 404 to other subsystems via the shared network. As part of this information exchange, each subsystem 101a-d can also communicate any faults or malfunctions that occur during operation to other subsystems.

Proceeding to block 408, method 400 adjusts the voltage output and/or operating parameters of the subsystem based on operating parameters of the distributed multi-phase generator. At this stage, subsystem 101a receives operating parameters of each of the other subsystems 101b-d over bus 120 so it is aware of how the other subsystems are operating with respect to the distributed multi-phase generator as a whole. Subsystem 101a then uses this information to control and if necessary to change its own operation to maintain (or modify) a combined voltage output to one or more loads connected to the distributed multi-phase generator 100. For example, if one of the subsystems experiences a fault, subsystem 101a can adjust its own voltage output to compensate for the loss of efficiency caused by the fault. Even in the absence of faults, each subsystem 101a-d can continuously adjust its various operating parameters to optimize efficiency of the distributed multi-phase generator 100.

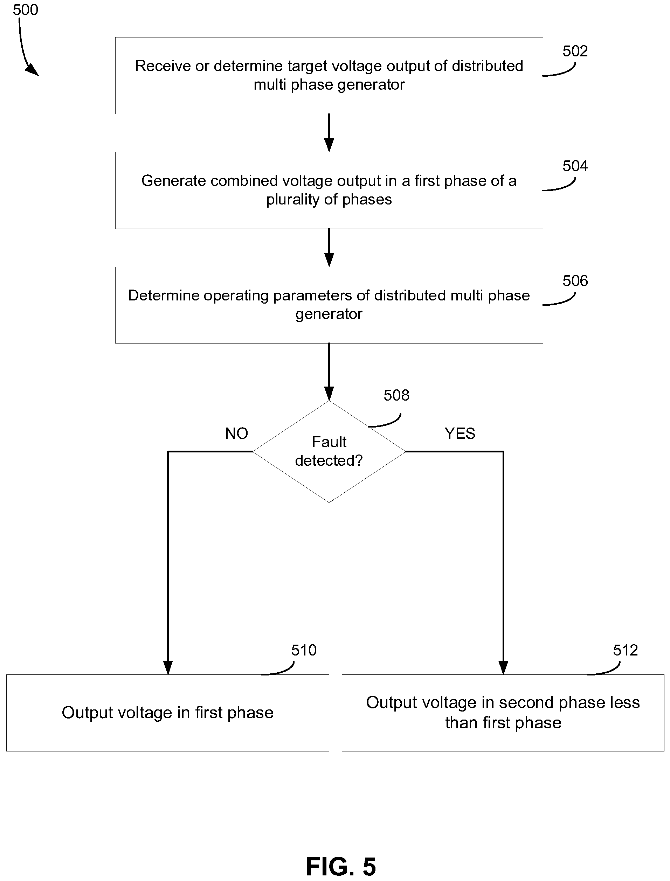

Figure 5 depicts a flow diagram of a method 500 for operating a distributed multi-phase generator. In some embodiments, method 500 is performed from the perspective of the distributed multi-phase generator 100 as depicted in Figure 1. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 500 includes receiving or determining a target voltage output of a distributed multi-phase generator at block 502. The target voltage output can correspond to the maximum output voltage of the distributed multi-phase generator when combined by each of the subsystems 101a-d. This voltage output can change during operation. For example, as the distributed multi-phase generator 100 initializes operation, the target voltage may be different than for steady-state operation. Receiving or determining the target voltage can be done by one or more of processors 102.

At block 504, method 500 generates a combined voltage output in a first phase of a plurality of phases. The first phase can be the maximum phase output supported by the distributed multi-phase generator. For example, for a twelve phase generator, the first phase can be twelve phases, or can be another of the phases based on the operating parameters of the distributed multi-phase generator. The combined voltage output is a combination of each of the voltage outputs generated from generator subsystems 101a-d.

Proceeding to block 506, method 500 determines one or more operating parameters of the distributed multi-phase generator. The operating parameters can include any of the parameters described with respect to the individual subsystems 101a-d as applied to the combined output of the distributed multi-phase generator.

Method 500 monitors for faults at block 508 and determines whether a fault is detected. If no fault is detected, then method 500 proceeds to block 510 and outputs the combined voltage output in a first phase (e.g., the twelve-phase output). However, if a fault is detected in block 508, method 500 instead proceeds to block 512 and outputs the combined voltage output in a second phase that is less than the first phase (e.g., any phase less than twelve phases). To determine which phase should be output at block 512, method 500 can analyze the operating parameters of the distributed multi-phase generator, including the specific operation of each generator subsystem. In some embodiments, an even phase output is preferred. However, with proper adjustment to the pulse width modulation of the generator, an odd number of phases can also be output.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and the like. Any of the foregoing may be supplemented by, or incorporated in, specially-designed application specific integrated circuits (ASICs).

### EXAMPLE EMBODIMENTS

Example 1 includes a distributed multi-phase generator system, comprising: a plurality of generator subsystems, each of the plurality of generator subsystems comprising: a respective at least one processor; a respective power generation circuit; and a respective motor electrically coupled to the respective power generation circuit, wherein the plurality of generator subsystems is configured to generate a combined variable phase voltage output in one of twelve phases, wherein the combined variable phase output includes an even or odd number of phases, wherein each of the plurality of generator subsystems are electrically coupled together via at least one shared network, wherein each of the plurality of generator subsystems is configured to determine respective operating parameters, and to communicate its respective operating parameters to other generator subsystems of the plurality of generator subsystems, wherein each of the plurality of generator subsystems is configured to adjust its respective voltage output relative to a desired combined voltage output based on at least one operating parameter of the distributed multi-phase generator system.

Example 2 includes the distributed multi-phase generator system of Example 1, wherein each respective power generation circuit comprises a set of winding coils configured to provide the respective voltage output to the respective motor, wherein each respective at least one processor is configured, for its respective generator subsystem, to: stagger a voltage output of one winding coil relative to another winding coil based on a measured phase of the respective motor, adjust one or more characteristics of the voltage output of one winding coil relative to a voltage output of the another winding coil based on the at least one operating parameter of the distributed multi-phase generator system.

Example 3 includes the distributed multi-phase generator system of Example 2, wherein the one or more characteristics include a phase of the voltage output, a frequency of the voltage output, an amplitude of the voltage output, or a type of modulation applied to the respective voltage output

Example 4 includes the distributed multi-phase generator system of any of Examples 1-3, wherein the distributed multi-phase generator system operates as a twelve-phase generator.

Example 5 includes the distributed multi-phase generator system of any of Examples 1-4, wherein when a first generator subsystem experiences a fault, the other generator subsystems in the plurality of generator subsystems are configured to adjust operation to output the combined variable phase voltage output.

Example 6 includes the distributed multi-phase generator system of any of Examples 1-5, wherein when a first generator subsystem experiences a processing fault, one or more generator subsystems in the plurality of generator subsystems are configured to control operation of the first generator subsystem.

Example 7 includes the distributed multi-phase generator system of any of Examples 1-6, wherein each respective power generation circuit comprises a set of winding coils configured to provide the respective voltage output to the respective motor, wherein each of the plurality of generator subsystems is configured to apply a periodic current to the respective set of winding coils, and to switch between a sinusoidal or a trapezoidal current to the respective set of winding coils based on the at least one operating parameter of the distributed multi-phase generator system.

Example 8 includes the distributed multi-phase generator system of Example 7, wherein each of the plurality of generator subsystems is configured to change the periodic current by applying a phase advance and/or a phase overlap to one or more of the respective set of winding coils.

Example 9 includes a distributed twelve-phase generator system, comprising: a plurality of generator subsystems, each of the plurality of generator subsystems comprising: a respective at least one processor; a respective power generation circuit; and a respective motor electrically coupled to the respective power generation circuit, wherein the plurality of generator subsystems is configured to generate a combined variable phase voltage output in one of twelve phases, wherein the combined variable phase output includes an even or odd number of phases, wherein each of the plurality of generator subsystems are electrically coupled together via at least one shared network, wherein each of the plurality of generator subsystems is configured to determine respective operating parameters, and to communicate its respective operating parameters to other generator subsystems of the plurality of generator subsystems, wherein each of the plurality of generator subsystems is configured to adjust its respective voltage output relative to a desired combined voltage output based on at least one operating parameter of the distributed twelve-phase generator system.

Example 10 includes the distributed twelve-phase generator system of Example 9, wherein the plurality of generator subsystems comprises four generator subsystems, wherein each generator subsystem is configured to generate a three-phase voltage output.

Example 11 includes the distributed twelve-phase generator system of any of Examples 9-10, wherein current output by the respective at least one motor is modulated by pulse width modulation signals, wherein each of the respective at least one processor is configured to adjust one or more parameters of the pulse width modulation signals based on the at least one operating parameter of the distributed twelve-phase generator system.

Example 12 includes the distributed twelve-phase generator system of any of Examples 9-11, wherein the at least one operating parameter comprises a target combined output voltage, motor speed of one or more of the respective motors, or an operating efficiency of one or more of the plurality of generator subsystems.

Example 13 includes the distributed twelve-phase generator system of any of Examples 9-12, wherein when a first generator subsystem experiences a fault, the other generator subsystems in the plurality of generator subsystems are configured to adjust operation to output the combined variable phase voltage output.

Example 14 includes the distributed twelve-phase generator system of any of Examples 9-13, wherein when a first generator subsystem experiences a processing fault, one or more generator subsystems in the plurality of generator subsystems are configured to control operation of the first generator subsystem.

Example 15 includes the distributed twelve-phase generator system of any of Examples 9-14, wherein each respective power generation circuit comprises a set of winding coils configured to provide the respective voltage output to the respective motor, wherein each respective at least one processor is configured, for its respective generator subsystem, to: stagger a voltage output of one winding coil relative to another winding coil based on a measured phase of the respective motor, adjust one or more characteristics of the voltage output of one winding coil relative to a voltage output of the another winding coil based on the at least one operating parameter of the distributed twelve-phase generator system.

Example 16 includes the distributed twelve-phase generator system of any of Examples 9-15, wherein the distributed twelve-phase generator is physically coupled to a vehicle.

Example 17 includes a method of operating a distributed multi-phase generator system, comprising: generating, by each of a plurality of generator subsystems electrically coupled together via at least one shared network, a voltage output in at least one of a plurality of phases; determining, by each of the plurality of generator subsystems, one or more operating parameters of the plurality of generator subsystems; communicating the respective operating parameters to at least one other generator subsystem of the plurality of generator subsystems; and adjusting a voltage output and/or operating parameters of at least one of the generator subsystems based on one or more operating parameters of the distributed multi-phase generator.

Example 18 includes the method of Example 17, comprising: determining that a fault exists in at least one of the plurality of generator subsystems; and adjusting the respective operating parameters of one or more generator subsystems not experiencing a fault to compensate for the fault experienced by the at least one of the plurality of generator subsystems.

Example 19 includes the method of any of Examples 17-18, comprising: determining that a processing fault exists in at least one of the plurality of generator subsystems; and controlling operation of the at least one generator subsystems that experienced the processing fault with at least one other generator subsystem.

Example 20 includes the method of any of Examples 17-19, wherein each generator subsystem comprises a set of winding coils configured to provide the respective voltage output to a respective motor, and further comprising: staggering a voltage output of one winding coil relative to another winding coil based on a measured phase of the respective motor, adjusting one or more characteristics of the voltage output of one winding coil relative to a voltage output of the another winding coil based on the at least one operating parameter of the distributed multi-phase generator system.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A distributed multi-phase generator system, comprising:
a plurality of generator subsystems, each of the plurality of generator subsystems comprising:
a respective at least one processor;
a respective power generation circuit; and
a respective motor electrically coupled to the respective power generation circuit,
wherein the plurality of generator subsystems is configured to generate a combined variable phase voltage output in one of twelve phases, wherein the combined variable phase output includes an even or odd number of phases,
wherein each of the plurality of generator subsystems are electrically coupled together via at least one shared network,
wherein each of the plurality of generator subsystems is configured to determine respective operating parameters, and to communicate its respective operating parameters to other generator subsystems of the plurality of generator subsystems,
wherein each of the plurality of generator subsystems is configured to adjust its respective voltage output relative to a desired combined voltage output based on at least one operating parameter of the distributed multi-phase generator system.

2. The distributed multi-phase generator system of claim 1, wherein each respective power generation circuit comprises a set of winding coils configured to provide the respective voltage output to the respective motor, wherein each respective at least one processor is configured, for its respective generator subsystem, to:
stagger a voltage output of one winding coil relative to another winding coil based on a measured phase of the respective motor,
adjust one or more characteristics of the voltage output of one winding coil relative to a voltage output of the another winding coil based on the at least one operating parameter of the distributed multi-phase generator system.

3. The distributed multi-phase generator system of claim 2, wherein the one or more characteristics include a phase of the voltage output, a frequency of the voltage output, an amplitude of the voltage output, or a type of modulation applied to the respective voltage output

4. The distributed multi-phase generator system of claim 1, wherein the distributed multi-phase generator system operates as a twelve-phase generator.

5. The distributed multi-phase generator system of claim 1, wherein when a first generator subsystem experiences a fault, the other generator subsystems in the plurality of generator subsystems are configured to adjust operation to output the combined variable phase voltage output.

6. The distributed multi-phase generator system of claim 1, wherein when a first generator subsystem experiences a processing fault, one or more generator subsystems in the plurality of generator subsystems are configured to control operation of the first generator subsystem.

7. The distributed multi-phase generator system of claim 1, wherein each respective power generation circuit comprises a set of winding coils configured to provide the respective voltage output to the respective motor, wherein each of the plurality of generator subsystems is configured to apply a periodic current to the respective set of winding coils, and to switch between a sinusoidal or a trapezoidal current to the respective set of winding coils based on the at least one operating parameter of the distributed multi-phase generator system.

8. The distributed multi-phase generator system of claim 7, wherein each of the plurality of generator subsystems is configured to change the periodic current by applying a phase advance and/or a phase overlap to one or more of the respective set of winding coils.

9. A method of operating a distributed multi-phase generator system, comprising:
generating, by each of a plurality of generator subsystems electrically coupled together via at least one shared network, a voltage output in at least one of a plurality of phases;
determining, by each of the plurality of generator subsystems, one or more operating parameters of the plurality of generator subsystems;
communicating the respective operating parameters to at least one other generator subsystem of the plurality of generator subsystems; and
adjusting a voltage output and/or operating parameters of at least one of the generator subsystems based on one or more operating parameters of the distributed multi-phase generator.

10. The method of claim 9, comprising:
determining that a fault exists in at least one of the plurality of generator subsystems; and
adjusting the respective operating parameters of one or more generator subsystems not experiencing a fault to compensate for the fault experienced by the at least one of the plurality of generator subsystems.
